# NEUE EUROPÄISCHE PATENTSCHRIFT

(11) **EP 0 374 353 B2**
(45) Veröffentlichungstag und Bekanntmachung des Hinweises auf die Entscheidung über den Einspruch: **25.09.1996**
(45) Hinweis auf die Patenterteilung: 10.03.1993
(21) Anmeldenummer: 89109706.5
(22) Anmeldetag: 30.05.1989
(51) Int. Cl.: B29C 45/32, B29C 45/28

(54) **Etagenheisskanal-Bausatz mit nach entgegengesetzten Seiten gerichteten Nadelverschlussdüsen**
Hot runner channel construction set for a stack mould with needle valve nozzles mounted in opposite directions
Système de construction pour canal chauffé pour moule à étages avec des buses à obturateur à aiguille montées en directions opposées

(30) Priorität: 21.12.1988 DE 3843037
(43) Veröffentlichungstag der Anmeldung: 27.06.1990
(73) Patentinhaber: FIRMA OTTO MÄNNER, D-79353 Bahlingen (DE)
(72) Erfinder: Friderich, Raimund, D-7831 Sasbach a. Rh. (DE)
(74) Vertreter: Schmitt, Hans, Dipl.-Ing.

(56) Entgegenhaltungen:
- FR-A- 2 294 041
- FR-A- 2 443 329
- US-A- 4 043 726
- US-A- 4 212 626
- US-A- 4 268 240

## Beschreibung

Die Erfindung betrifft einen Etagenheißkanal-Bausatz mit Nadelverschlußdüsen gemäß Oberbegriff des Patentanspruches 1.

Ein derartiger Etagenheißkanal-Bausatz ist aus FR-A-2 294 041 bekannt, wobei jeweils ein Einzelblock zwei Nadelverschlußdüsen zugeordnet ist. An den Verschlußnadeln sind dabei Kolben vorgesehen, die auf der einen Seite durch Gießwerkstoff und auf der anderen Seite durch Druckfedern beaufschlagt werden. Die Druckfedern halten die Verschlußnadeln zunächst in schließstellung, so daß beim Gießvorgang der zu gießende Werkstoff einem so hohen Druck ausgesetzt werden muß, daß er einerseits die Druckkraft dieser Federn überwindet und die Verschlußnadeln öffnet und andererseits auch noch zum Ausfüllen der Form ausreicht.

Es sind außerdem andere Lösungen bekannt, bei denen die Nadelenden jeweils Kolbenantriebe haben, die mit einem Druckmedium betätigt werden, so daß die Betätigung der Nadelverschlußdüse von dem Spritzgießwerkstoff und dessen Einführen unabhängig ist.

Dabei kennt man Lösungen, bei denen die Angußstellen bzw. die Nadelverschlüsse der einander gegenüberliegenden Seiten gegeneinander seitlich versetzt sind, weil andernfalls die Verschlußnadeln mit ihren axial an den Nadelenden angeordneten Kolbenantrieben nicht in die vorgegebene Einbauhöhe der Spritzgießmaschine zwischen den beiden Formen passen.

Eine andere Lösung, bei welcher die Nadelverschlußdüsen und die Angußstellen einander jeweils gegenüber liegen, benötigt wegen der vorgegebenen Einbauhöhe gegenüber den Nadeln seitlich versetzte Kolbenantriebe, die über Kipphebeln die Enden der Verschlußnadeln beaufschlagen (US-A-42 12 626).

Beide Lösungen sind somit sehr aufwendige und platzraubende Konstruktionen, die außerdem eine schlechte Montierbarkeit und Demontierbarkeit haben und deshalb auch nicht wartungsfreundlich sind. Nadelverschlußdüsen müssen nämlich von Zeit zu Zeit z.B. zur Reparatur ihrer Heizung oder wegen des auftretenden Verschleißes ausgebaut oder ausgetauscht werden.

Die Anordnung mit einander gegenüberliegenden Angußstellen ist zwar bezüglich des Gießverfahrens und der Formgestaltung günstig, weil die beidseits angeordneten Formen symmetrisch ausgebildet sein können, jedoch wird durch die dabei erforderlichen Kipphebel zum Betätigen der Verschlußnadeln innerhalb des Bausatzes soviel Platz verbraucht, daß nur relativ wenig Verschlußdüsen pro Fläche oder pro Bausatz untergebracht werden können.

Die gegeneinander versetzten Verschlußdüsen können eventuell etwas platzgünstiger angeordnet werden, ergeben aber auf den gegenüberliegenden Seiten des Bausatzes verschieden liegende Angußstellen und damit unterschiedliche Formen und haben auch einen erhöhten Platzbedarf dadurch, daß jeweils die Verschlußdüse für die eine Seite praktisch über die ganze Höhe des Bausatzes reicht und einander benachbarte Verschlußdüsen einen gewissen Mindestabstand voneinander haben müssen.

Aus der US-A-40 43 726 ist eine Anordnung bekannt, bei welcher die Angußstellen einander jeweils gegenüberliegen, die Verschlußnadeln aber nicht mit Hilfe eines Kolbens zwangsgesteuert werden. Es wird vielmehr durch seitlich angeordnete Zuführrohre das Spritzgut in die Düse eingespritzt und wirkt dadurch auch auf die Verschlußnadel, so daß diese gegen die Kraft einer Feder geöffnet wird und das Spritzgut in die Form gelangt. Wenn in der Nachdruckphase der Spritzdruck abfällt, wird die Nadel durch die erwähnte Feder wieder geschlossen. Dabei kann dies eventuell zu früh erfolgen und eine ungenügende Füllung der Form entstehen. Eine präzise Steuerung der Nadel für ihr Öffnen und Schließen ist auf diese Weise nicht möglich.

Es besteht deshalb die Aufgabe, einen Bausatz der eingangs erwähnten Art zu schaffen, bei welchem die Angußpunkte oder -stellen bzw. die Nadelverschlüsse beider Seiten jeweils auf gleicher Höhe angeordnet sein können und die Verschlußnadeln miteinander fluchten, dennoch aber für jeden Verschluß ein geringer Platzbedarf benötigt wird und praktisch genausoviele Verschlüsse an jeder Seite des Bausatzes angeordnet werden können, wie dies bei einem einseitigen oder einfachen Bausatz der Fall ist.

Diese scheinbar widersprüchliche Aufgabe wird mit den Mitteln und Merkmalen des Patentanspruches 1 gelöst.

In ungewöhnlicher Weise wird also der Kolbenantrieb in den Heißkanalverteiler integriert, wobei dieser widerum in die erwähnten Teile und Blöcke aufgeteilt ist, die aber durch die erwähnte Anordnung der Austrittsöffnungen des Haupt-Heißkanalverteilers in Übereinstimmung mit den Eintrittsöffnungen der Einzelblöcke dennoch den Gießwerkstoff in gewohnter Weise führen können.

Auf diese Weise ergibt sich auch die Ausgestaltungsmöglichkeit, daß die Kolbenzylinderantriebe zusammen mit den ihnen zugehörigen Einzelblöcken des Heißkanalverteilers montierbar und demontierbar sind und eine so geringe Bauhöhe haben, daß sie einander gegenüberliegend und miteinander fluchtend innerhalb der vorgegebenen Einbauhöhe des Bausatzes Platz haben. Vor allem ist die Montage und Demontage dadurch sehr einfach, daß der Bausatz mittig geteilt und seine Teile an dieser Mitte trennbar sein können. Dadurch können nämlich die Einzelblöcke und der Haupt-Heißkanalverteiler freigegeben und zugänglich gemacht werden und zusammen mit den Nadelverschlußdüsen aus ihren Sitzen herausgezogen werden.

Dadurch, daß zwischen den Gehäuseplatten des Bausatzes in deren Trennebene eine unabhängig von dem Haupt-Heißkanalverteiler einsetzbare Distanzplatte mit Zuführkanälen für die Druckluft zur Betätigung der Antriebskolben vorgesehen ist, deren Austrittsöffnungen mit Eintrittsöffnungen für die Luft in den Einzelblöcken übereinstimmen und die vorzugsweise mit einem Rand bis zwischen zwei miteinander fluchtende Kolben ragt und dort ihre andere Austrittsöffnung hat, kann die Druckluft zur Betätigung des Kolbenantriebes unmittelbar über eine solche separate Distanzplatte auf die Oberseite der beiden Kolben zur Durchführung der Verschlußbewegung und über Abzweigleitungen auf die entgegengesetzte Seite der Kolben für deren Rückzugbewegung geleitet werden und zwar in vorteilhafter Weise unabhängig von dem Haupt-Heißkanalverteiler.

Zweckmäßig ist es dabei, wenn die Gehäuseplatten des Bausatzes Ausnehmungen für die beheizten Einzelblöcke haben, die in ihren Außenabmessungen größer als diese Einzelblöcke sind. Dadurch ergibt sich genügend Platz für die auftretenden Wärmedehnungen der Einzelblöcke relativ zu den nichtbeheizten Gehäuseplatten.

Da die Kolben jeweils in einem dem Heißkanalverteiler zugehörigen Einzelblock angeordnet sind und somit erheblichen Temperaturen ausgesetzt werden, ist es vorteilhaft, wenn die Kolben jeweils wenigstens zwei geschlitzte Metallkolbenringe aufweisen, deren Schlitze am Umfang eines Kolbens gegeneinander versetzt sind.

Insgesamt ergibt sich ein Etagenheißkanal-Bausatz, der auf engstem Raume soviele miteinander fluchtende und nach entgegengesetzten Seiten gerichtete Nadelverschlußdüsen pro Fläche haben kann, wie ein bisheriger Einfachbausatz, bei welchem der Kolben koaxial zu der Verschlußnadel angeordnet war. Eine solche koaxiale Anordnung des Antriebskolbens und der Verschlußnadel ist nämlich nun auch in diesem Falle dadurch möglich, daß der Kolben in einen Einzelblock des aufgeteilten Heißkanalverteilers eingesetzt und eingebaut ist.

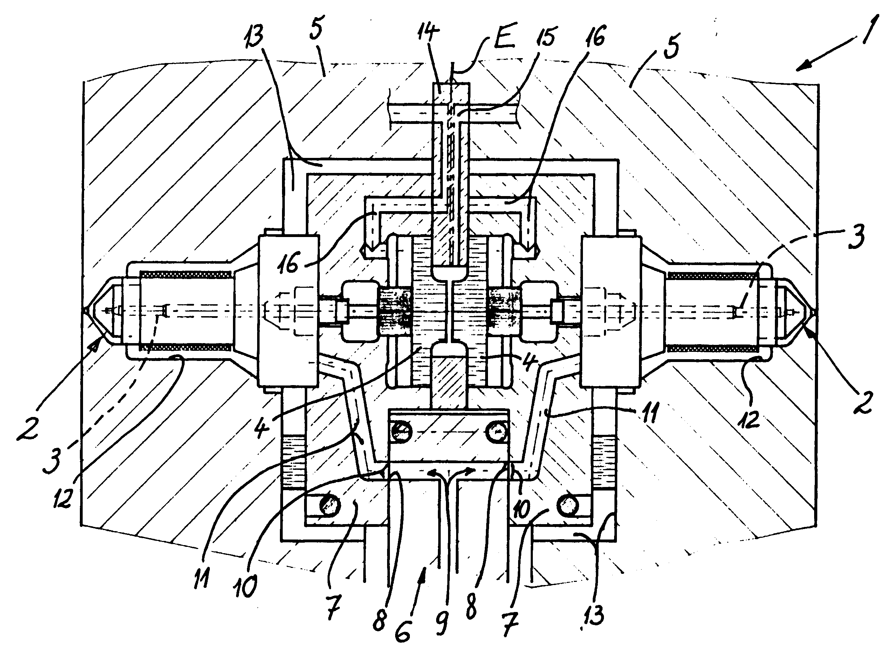

Nachstehend ist die Erfindung mit ihren ihr als wesentlich zugehörenden Einzelheiten anhand der Zeichnung in einem Ausführungsbeispiel noch näher beschrieben.

Die einzige Figur zeigt einen Längsschnitt durch einen Teil eines derartigen Bausatzes im Bereich zweier sich gegenüberliegender und miteinander fluchtender Nadelverschlußdüsen.

Ein im Ganzen mit 1 bezeichneter, in der Zeichnung nur als Ausschnitt dargestellter Etagenheißkanal-Bausatz, im folgenden auch kurz Bausatz 1 genannt, hat jeweils mehrere einander entgegengesetzte, nach zwei Seiten des Bausatzes 1 gerichtete Nadelverschlußdüsen 2, die beidseits des Bausatzes 1 angeordnete, in der Zeichnung nicht dargestellte Spritzgieß-Formen gleichzeitig beaufschlagen können. Die Verschlußnadeln 3 sind dabei jeweils mittels Kolben 4 hin-und herbewegbar und zwischen den kalten Platten 5 des Bausatzes 1 ist ein etwa plattenförmiger Heißkanalverteiler 6 für den Gießwerkstoff angeordnet.

In der Zeichnung erkennt man, daß der Kolben 4 zum Antrieb der jeweiligen Verschlußnadel 3 koaxial zu dieser in dem Heißkanalverteiler angeordnet ist, wobei dieser Heißkanalverteiler in Einzelblöcke 7 aufgeteilt ist, von denen jeweils ein Einzelblock 7 einer Nadelverschlußdüse 2 zugeordnet ist und wobei ein Haupt-Heißkanalverteiler 6 in den Bereich der Einzelblöcke 7 ragt, dessen Austrittsöffnungen 8 seiner Zuführkanäle 9 in Gebrauchsstellung mit den Eintrittsöffnungen 10 der Fortsetzungen 11 der Kanäle 9 in den Einzelblöcken 7 übereinstimmen. Man erkennt deutlich, daß trotz der Aufteilung des Heißkanalverteilers in einerseits den Haupt-Heißkanalverteiler 6 und andererseits die erwähnten Einzelblöcke 7 dennoch insgesamt durchgehende Zuführkanäle 9 und 11 zu den Nadelverschlußdüsen 2 vorhanden sind.

Auf diese Weise sind die Kolbenzylinderantriebe zusammen mit den ihnen zugehörigen Einzelblöcken 7 montierbar und demontierbar und haben insgesamt eine so geringe Bauhöhe, daß sie einander gegenüberliegend und miteinander fluchtend innerhalb der vorgegebenen Einbauhöhe des Bausatzes 1 Platz haben. Man erkennt, daß der Bausatz 1 mittig in der Ebene E geteilt und seine Teile an dieser Mitte E trennbar sind, wodurch die Einzelblöcke 7 und auch der Haupt-Heißkanalverteiler 6 freigegeben werden und zusammen mit den Nadelverschlußdüsen 2 aus ihren Ausnehmungen oder Sitzen 12 herausgezogen werden können. Dabei haben die Gehäuseplatten 5 des Bausatzes 1 Ausnehmungen 13 für die beheizten Einzelblöcke 7 die in ihren Außenabmessungen größer als diese Einzelblöcke 7 sind, so daß die Einzelblöcke 7 genügend Platz für die auftretenden Wärmedehnungen haben.

Zwischen den Gehäuseplatten 5 des Bausatzes 1 ist im Ausführungsbeispiel in deren Trennebene E eine unabhängig von dem Haupt-Heißkanalverteiler 6 einsetzbare Distanzplatte 14 mit Zuführkanälen 15 für die Druckluft zur Betätigung der Antriebskolben 4 vorgesehen. Deren Austrittsöffnungen stimmen mit Eintrittsöffnungen für die Luft in den Einzelblöcken 7 überein und außerdem reicht diese Distanzplatte 14 bis zwischen zwei fluchtende Kolben 4, wo sie ihre andere Austrittsöffnung hat. Somit kann die Druckluft über diese separate Distanzplatte 14 unmittelbar an die Oberseite der beiden fluchtenden Kolben 4 und über Abzweigleitungen 16 auf die entgegengesetzten Seiten der Kolben 4 für deren Rückzugbewegung geleitet werden. Dabei erfolgt diese Luftführung in vorteilhafter Weise unabhängig von dem Heißkanalverteiler, so daß auch eine übermäßige Erwärmung dieser Luft vermieden wird.

In nicht näher dargestellter Weise können dabei die Kolben 4 jeweils wenigstens zwei geschlitzte Metallkolbenringe haben, deren Schlitze am Umfang jeweils gegeneinander versetzt sind, um zu berücksichtigen, daß die Kolben an Stellen hoher Temperatur, nämlich in den zum Heißkanalverteiler gehörenden Einzelblöcken 7 angeordnet sind. Diese Anordnung der Antriebskolben 4 innerhalb von Teilen des Heißkanalverteilers ergibt jedoch die platzsparende und zweckmäßige Anordnung, bei welcher die Kolben und die von ihnen betätigten Nadelverschlußdüsen für einander gegenüberliegende Angußstellen miteinander fluchten können. Gleichzeitig ist die Montage und Demontage sehr einfach, weil nach der Trennung des Bausatzes an der Trennebene E die Einzelblöcke 7 mit den Nadelverschlußdüsen 2 und den Antriebskolben 4 ohne weiteres zugänglich werden und auch die etwa in der Trennebene befindlichen sonstigen Teile, insbesondere der Haupt-Heißkanalverteiler 6 und die Distanzplatte 14 zugänglich sind.

## Patentansprüche

1. Etagenheißkanal-Bausatz (1) mit Nadelverschlußdüsen (2), die einander entgegengesetzt nach zwei Seiten des Bausatzes (1) gerichtet sind und beidseits des Bausatzes (1) angeordnete Spritzgieß-Formen gleichzeitig beaufschlagen, wobei die Verschlußnadeln (3) jeweils mittels Kolben (4) hin- und herbewegbar sind und zwischen den kalten Platten (5) des Bausatzes (1) ein etwa plattenförmiger Heißkanalverteiler (6,7) zu dem Gießwerkstoff angeordnet ist, wobei der Kolben (4) zum Antrieb der jeweiligen Verschlußnadel (3) koaxial zu dieser in dem Heißkanalverteiler (6,7) angeordnet ist und wobei der Heißkanalverteiler (6,7) in Einzelblöcke (7) aufgeteilt ist, von denen jeweils ein Einzelblock (7) einer Nadelverschlußdüse (2) zugeordnet ist und wobei ein Haupt-Heißkanalverteiler (6) in den Bereich der Einzelblöcke (7) ragt, dessen Austrittsöffnungen (8) in Gebrauchsstellung mit den Eintrittsöffnungen (10) der Einzelblöcke (7) übereinstimmen,
**dadurch gekennzeichnet,**
daß zwischen den Gehäuseplatten (5) des Bausatzes (1) etwa in der Trennebene E eine unabhängig von dem Haupt-Heißkanalverteiler (6) einsetzbare Distanzplatte (14) mit Zuführkanälen (15) für Druckluft zur Betätigung der Antriebskolben (4) vorgesehen ist, deren Austrittsöffnungen mit Eintrittsöffnungen für die Luft in den Einzelblöcken (7) übereinstimmen und die bis zwischen zwei Kolben (4) reicht und dort ihre andere Austrittsöffnung hat.

2. Etagenheißkanal-Bausatz nach Anspruch 1, dadurch gekennzeichnet, daß die Kolbenzylinderantriebe zusammen mit den ihnen zugehörigen Einzelblöcken (7) des Heißkanalverteilers montierbar und demontierbar sind und eine so geringe Bauhöhe haben, daß sie einander gegenüberliegend und miteinander fluchtend innerhalb der vorgegebenen Einbauhöhe des Bausatzes (1) Platz haben.

3. Bausatz nach Anspruch 1 oder 2, dadurch gekennzeichnet, daß der Bausatz (1) mittig geteilt ist und seine Teile an dieser Mittelebene E trennbar sind.

4. Bausatz nach einem der Ansprüche 1 bis 3, dadurch gekennzeichnet, daß die kalten Gehäuseplatten (5) des Bausatzes (1) Ausnehmungen für die beheizten Einzelblöcke (7) haben, wobei die Ausnehmungen in ihren Außenabmessungen größer als diese Einzelblöcke (7) sind.

5. Bausatz nach einem der Ansprüche 1 bis 4, dadurch gekennzeichnet, daß die Kolben (4) jeweils wenigstens zwei geschlitzte Metallkolbenringe aufweisen, deren Schlitze am Umfang eines Kolbens (4) gegeneinander versetzt sind.

## Claims

1. A hot runner channel construction set (1) for a stack mould with needle valve nozzles (2) which are mounted in opposite directions towards two sides of the construction set (1) and simultaneously act upon injection moulds arranged on both sides of the construction set (1), wherein the valve needles (2) are in each case adapted to reciprocate by means of pistons (4) and arranged between the cold plates (5) of the construction set (1) there is an approximately platelike hot runner distributor (6, 7) for the moulding material, wherein the piston (4) for driving the respective valve needle (3) is arranged coaxially therewith in the hot runner distributor (6, 7) and wherein the hot runner distributor (6, 7) is divided into individual blocks (7), of which in each case one individual block (7) is assigned to one needle valve nozzle (2) and wherein a main hot runner distributor (6) projects into the area of the individual blocks (7), in the position of use the outlets (8) of said main hot runner distributor registering with the intake ports (10) of the individual blocks (7), **characterized in that** provided between the casing plates (5) of the construction set (1), approximately in the parting plane (E), is a spacing plate (14) which is insertable independently of the main hot runner distributor (6) and has feed channels (15) for compressed air to operate the drive pistons (4), the outlets of said feed channels registering with intake ports for the air in the individual blocks (7) and said spacing plate projecting as far as between two pistons (4) and there having its other outlet.

2. A hot runner channel construction set for a stack mould, as claimed in claim 1, characterized in that the piston cylinder drives are adapted to be assembled and dismantled together with the appertaining individual blocks (7) of the hot runner distributor and their overall height is to low that in opposed, aligned relationship they have room within the given mounting height of the construction set (1).

3. A construction set as claimed in claim 1 or claim 2, characterized in that the construction set (1) is centrally divided and the parts thereof are separable at said centre plane E.

4. A construction set as claimed in any one of claims 1 to 3, characterized in that the cold casing plates (5) of the construction set (1) have recesses for the heated individual blocks (7), the recesses being larger in their external dimensions than said individual blocks (7).

5. A construction set as claimed in any one of claims 1 to 4, characterized in that the pistons (4) have in each case at least two slit metal piston rings whose slits are staggered at the circumference of a piston (4).

## Revendications

1. Module (1) à canaux chauffés pour étage de moule comprenant des buses (2) à obturateur à aiguille qui sont dirigées à l'opposé l'une de l'autre vers deux côtés du module (1) et qui alimentent simultanément des moules de moulage par injection disposés des deux côtés du module (1), cependant que les aiguilles d'obturation (3) peuvent être à chaque fois déplacées en va-et-vient au moyen de pistons (4), et qu'un organe (6, 7) de distribution aux canaux chauffés, à peu près en forme de plaque et destiné à la matière à mouler, est disposé entre les plaques froides (5) du module (1), cependant que le piston (4) qui est destiné à l'entraînement de l'aiguille d'obturation correspondante (3) est disposé d'une manière coaxiale à celle-ci dans l'organe (6, 7) de distribution aux canaux chauffés, que l'organe (6, 7) de distribution aux canaux chauffés est divisé en blocs individuels (7) parmi lesquels un bloc individuel (7) est à chaque fois associé à une buse (2) à obturateur à aiguille, et qu'un organe principal (6) de distribution aux canaux chauffés fait saillie dans la région des blocs individuels (7), et que ses orifices de sortie (8) coïncident, en position d'utilisation, avec les orifices d'entrée (10) des blocs individuels (7), caractérisé par le fait qu'il est prévu, entre les plaques de carter (5) du module (1), et à peu près dans le plan de séparation E, une plaque d'écartement (14) qui peut être insérée indépendamment de l'organe principal (6) de distribution aux canaux chauffés, qui est munie de canaux (15) pour amener l'air comprimé destiné à actionner les pistons d'entraînement (4), dont les orifices de sortie coïncident avec des orifices d'entrée destinés à l'air et ménagés dans les blocs individuels (7), qui arrive jusqu'entre deux pistons (4) et qui présente à cet endroit son autre orifice de sortie.

2. Module à canaux chauffés pour étage de moule selon la revendication 1, caractérisé par le fait que les entraînements par vérins peuvent être montés et démontés avec les blocs individuels (7) de l'organe de distribution aux canaux chauffés qui leur sont associés, et qu'ils présentent par construction une hauteur si faible qu'ils trouvent place, en étant situés à l'opposé l'un de l'autre et en étant alignés l'un sur l'autre, à l'intérieur de la hauteur de montage prédéterminée du module (1).

3. Module selon la revendication 1 ou 2, caractérisé par le fait que le module (1) est divisé en son milieu, et que ses parties peuvent être séparées selon ce plan médian E.

4. Module selon l'une des revendications 1 à 3, caractérisé par le fait que les plaques de carter froides (5) du module (1) présentent des évidements qui sont destinés aux blocs individuels chauffés (7), ces évidements présentant des dimensions extérieures supérieures à celles de ces blocs individuels (7).

5. Module selon l'une des revendications 1 à 4, caractérisé par le fait que les pistons (4) présentent à chaque fois au moins deux segments métalliques fendus dont les fentes sont à chaque fois décalées entre elles sur le pourtour d'un piston (4).
